# EUROPÄISCHE PATENTANMELDUNG

(11) **EP 2 876 514 A1**
(43) Veröffentlichungstag der Anmeldung: **27.05.2015**
(21) Anmeldenummer: 14003835.7
(22) Anmeldetag: 13.11.2014
(51) Int. Cl.: G05B 19/042, G06Q 10/00

(54) **Schleifenprüfung der Funktionsfähigkeit technischer Geräte eines industriellen Prozessautomatisierungssystems**

(30) Priorität: 22.11.2013 DE 102013019625
(71) Anmelder: ABB Technology AG, 8050 Zürich (CH)
(72) Erfinder: Shah, Neil, 68309 Mannheim (DE); Bollmeyer, Stefan, 32425 Minden (DE)
(74) Vertreter: Marks, Frank

(57) **Zusammenfassung**

Die Erfindung betrifft ein Verfahren und System zur Schleifenprüfung der Funktionsfähigkeit von in einem industriellen Prozessautomatisierungssystem integrierten und von mindestens einer elektronischen Steuerungseinheit (1) über drahtgebundene oder drahtlose Verbindungen (2) betriebenen technischen Geräten (3a-3c) zur Steuerung des industriellen Prozesses, wobei die folgenden Prüfungsschritte durchgeführt werden:
a) Konfiguration der Schleifenprüfung durch Auswahl der hierin einzubeziehenden technischen Geräte (3a-3c) und Festlegung der zu verwendenden Prüfungsvariante in einer Gerätemanagementeinheit (4) mit graphischer Benutzerschnittstelle,
b) Durchführung der Schleifenprüfung durch die Gerätemanagementeinheit (4) bei jedem der ausgewählten technischen Geräte (3a-3c) mit der zugeordneten Prüfungsvariante.

## Beschreibung

Die Erfindung betrifft ein Verfahren zur Schleifenprüfung der Funktionsfähigkeit von in einem industriellen Prozessautomatisierungssystem integrierten und von mindestens einer elektronischen Steuereinheit über drahtgebundene oder drahtlose Verbindungen betriebene technische Geräte zur Steuerung des industriellen Prozesses. Weiterhin betrifft die Erfindung auch ein industrielles Prozessautomatisierungssystem mit technischen Mitteln, die zur Durchführung dieses Verfahrens ausgebildet sind.

In industriellen Anlagen, insbesondere der chemischen Industrie, kommen Prozessautomatisierungssysteme zur Anwendung, welche den in der industriellen Anlage ablaufenden Herstellungsprozess überwachen und steuern. Diese technischen Mittel sind vornehmlich Aktoren - wie Ventile, Pumpantriebe, Stellglieder und dergleichen - sowie Sensoren - wie Temperaturfühler, Durchflussmesser, Drucksensoren und andere Messumformer. Trotz der Vielfalt in der Geräteart sind die technischen Geräte an standardisierte Kommunikationsschnittstellen anschließbar, um mit mindestens einer übergeordneten elektronischen Steuereinheit zu kommunizieren. Dabei kann der Kommunikationskanal drahtgebunden oder drahtlos ausgebildet sein.

Je nach Art der Kommunikationsschnittstelle sind die im Prozessautomatisierungssystem eingebundenen technischen Geräte als digitale Feldbusgeräte, Feldgeräte mit HART-Kommunikation oder analoge Feldgeräte in 4..20mA Technologie ausgebildet. Daneben gibt es auch andere standardisierte Kommunikationsschnittstellen, welche im Rahmen industrieller Prozessautomatisierungssysteme zur Anwendung kommen können.

Trotz dieser Vielfalt hinsichtlich der Gerätearten und Kommunikationsschnittstellen müssen insbesondere vor der Inbetriebnahme eines Prozessautomatisierungssystems oder auch während des Betriebs in festgelegten Zeitabständen Funktionstests der technischen Geräte durchgeführt werden, welche über eine Schleifenprüfung unter Einbeziehung der zentralen elektronischen Steuereinheit erfolgen.

Gemäß des allgemein bekannten Standes der Technik muss bei einer Schleifenprüfung von beispielsweise analogen Feldgeräten ein Testingenieur direkt am technischen Gerät in dessen ausgeschaltetem Zustand ein von diesem zu erzeugendes elektrisches Signal simulieren, beispielsweise in Schritten von 4 mA bis 20mA, welches an die übergeordnete elektronische Steuereinheit weitergeleitet wird. Bei digitalen Feldgeräten würden verschiedene Prozentwerte im Bereich 0%-100% vorgegeben oder direkte Messwerte in dem konfigurierten Messbereich. Ein anderer Testingenieur an der zentralen elektronischen Steuereinheit hat die empfangenen Signale in den verschiedenen Stufen zu bestätigen und steht hierzu in fernmündlichen Kontakt mit dem anderen Testingenieur am Feldgerät, beispielsweise über Sprechfunk.

Da diese Prozedur für jedes der technischen Geräte einen hohen Aufwand erfordert, nimmt die Schleifenprüfung der Funktionalität der technischen Geräte in einem industriellen Prozessautomatisierungssystem recht viel personellen und zeitlichen Aufwand in Anspruch.

Da für die Schleifenprüfung nicht allein für die vorstehend beispielhaft angegebenen analogen Feldgeräte durchzuführen ist, sondern ebenfalls für die gewöhnlich daneben auch eingebundenen Feldgeräte mit HART-Kommunikation sowie für digitale Feldbusgeräte, verursacht die artgerechte Durchführung der Schleifenprüfung einen erhöhten logistischen Aufwand, weil auch die jeweils auf die Art der Kommunikationsschnittstelle angepassten Prüfungsvarianten entsprechend differieren.

Es ist daher die Aufgabe der vorliegen Erfindung eine Schleifenprüfung der Funktionsfähigkeit technischer Geräte eines industriellen Prozessautomatisierungssystems zu schaffen, welche eine sichere und vollständige Überprüfung verschiedenartiger technischer Geräte des Prozessautomatisierungssystems innerhalb einer kurzen Zeit ermöglicht.

Die Prüfung umfasst neben der Funktionsfähigkeit des Geräts als solches auch die korrekte Konfiguration für den vorgesehenen Einsatzzweck und ob der Prozesswert in der Steuereinheit mit demselben Prozesswert im Gerät übereinstimmt.

Die Aufgabe wird ausgehend von einem Verfahren gemäß dem Oberbegriff von Anspruch 1 in Verbindung mit dessen kennzeichnenden Merkmalen gelöst. Hinsichtlich eines industriellen Prozessautomatisierungssystems wird die Aufgabe durch Anspruch 5 gelöst.

Die Erfindung schließt die verfahrenstechnische Lehre ein, dass in einer Gerätemanagementeinheit mit graphischer Benutzerschnittstelle, welche vorzugsweise Bestandteil der zentralen elektronischen Steuereinheit des Prozessautomatisierungssystems ist, zunächst eine Konfiguration der Schleifenprüfung durch Auswahl der hierin einzubeziehenden technischen Geräte und Festlegung der zu verwendenden Prüfungsvariante erfolgt, wonach durch die Gerätemanagementeinheit die Schleifenprüfung bei jedem der ausgewählten technischen Geräte mit der zugeordneten Prüfungsvariante durchgeführt wird.

Der Vorteil der erfindungsgemäßen Lösung liegt insbesondere darin, dass die Schleifenprüfung der Funktionsfähigkeit sämtlicher technischer Geräte durch einen einzigen Prüfingenieur von zentraler Stelle aus durchgeführt werden kann. Eine fehleranfällige fernmündliche Kommunikation mit weiteren Prüfingenieuren kann somit entfallen. Bei der erfindungsgemäßen Lösung wird das technische Gerät durch die Gerätemanagementeinheit veranlasst, die auszusendenden Werte durch Nutzung verschiedener Arten von Gerätetreibern zu simulieren. Der Zeitaufwand zur vollständigen Schleifenprüfung aller in einem Prozessautomatisierungssystem integrierten technischen Geräte wird somit erheblich reduziert. Gleichzeitig sinkt der Personalaufwand für die Schleifenprüfung.

Nach einem weiteren Merkmal der Erfindung wird zur Konfiguration der Schleifenprüfung softwaretechnisch auf Engineeringdaten des Prozessleitsystems zugegriffen, um daraus die Sollwerte für die Prüfschritte abzuleiten.

Gemäß einer weiteren die Erfindung verbessernden Maßnahme wird vorgeschlagen, dass durch die Gerätemanagementeinheit ein Bericht über das positive oder negative Ergebnis der Schleifenprüfung der Funktionalität für jedes der ausgewählten und geprüften Geräte erstellt und ausgegeben wird. Der Bericht kann dabei neben der Information hinsichtlich des Bestehens oder Nichtbestehens der Prüfung für jedes technische Gerät auch Informationen hinsichtlich Zeit und Datum des Tests, physikalischer Prüfstatus und dergleichen enthalten.

Vorzugsweise wird die Schleifenprüfung nach Maßgabe einer definierten Prüfreihenfolge der ausgewählten technischen Geräte durchgeführt. Dies bedeutet, dass Gerät für Gerät je nach zugeordneter Prüfvariante hinsichtlich seiner Funktion geprüft wird. Vorzugsweise werden gleichartige Geräte, wie beispielsweise nur analoge Feldgeräte, in einem Prüflauf geprüft, welche zuvor entsprechend gruppiert ausgewählt werden können. Alternativ hierzu ist es auch möglich, die Schleifenprüfung nur hinsichtlich einer Geräteart durchzuführen, beispielsweise für alle Messumformer. Die Erfindung kann in Form eines Softwareprogrammprodukts mit Steueranweisungen zur Durchführung des vorstehend angegebenen Verfahrens realisiert sein, wobei die Steueranweisungen auf einem Datenträger abgespeichert sind, welcher mit der Gerätemanagementeinheit des industriellen Prozessautomatisierungssystem zum Datenaustausch verbindbar ist. Dabei kann der Datenträger als ein transportables Speichermedium oder als ein in einem Kommunikationsnetzwerk eingebundener Server ausgebildet sein.

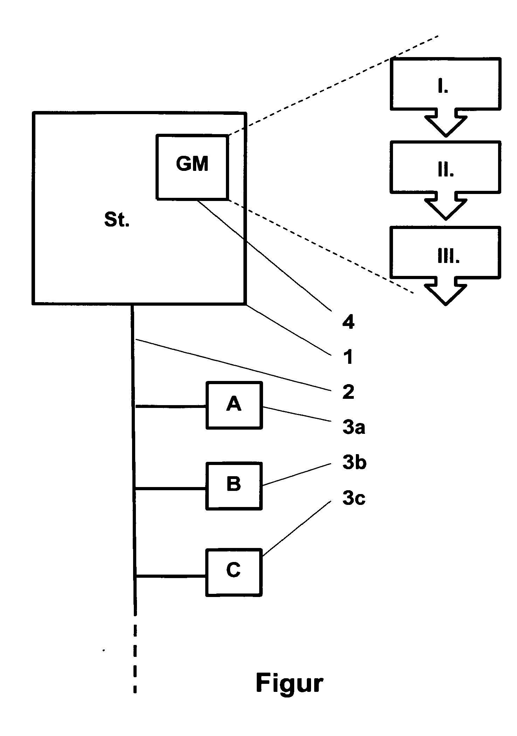

Weitere die Erfindung verbessernde Maßnahmen sind in den abhängigen Ansprüchen angegeben oder werden nachstehend gemeinsam mit der Beschreibung eines bevorzugten Ausführungsbeispiels anhand der Zeichnung näher dargestellt. Die einzige Figur zeigt ein Blockschaltbild eines industriellen Prozessautomatisierungssystems mit mehreren technischen Geräten, die von einer zentralen elektronischen Steuereinheit aus einer Schleifenprüfung auf Funktionsfähigkeit unterziehbar sind.

Gemäß Figur ist in einem - nicht weiter dargestellten - Prozessautomatisierungssystem eine zentrale elektronische Steuereinheit 1 angeordnet, von welcher aus über eine drahtgebundene Verbindung 2 mehrere technische Geräte 3a bis 3c zur Steuerung des industriellen Systems betrieben werden. Die technische Geräte 3a bis 3c sind in diesem Ausführungsbeispiel analoge Feldgeräte mit 4..20mA Technologie als Kommunikationsschnittstelle, welche hinsichtlich ihrer Geräteart als Messumformer ausgebildet sind. Daneben existieren auch weitere - nicht weiter dargestellte - technische Geräte anderer Geräteart im Prozessautomatisierungssystem.

Die elektronische Steuerungseinheit **1** beinhaltet eine Gerätemanagementeinheit **4,** welche - ebenso wie die elektronische Steuereinheit **1 -** als Software gesteuerter Rechner ausgebildet ist. Die als Rechner ausgebildete Gerätemanagementeinheit **4** führt innerhalb der elektronischen Steuereinheit **1** Steueranweisungen aus, welche unter anderem eine Schleifenprüfung der Funktionsfähigkeit der technischen Geräte **3a** bis 3c beinhaltet.

In weiterer Ausgestaltung der Erfindung kann vorgesehen sein, dass die Steueranweisungen initiiert durch die Gerätemanagementeinheit **4** über die Kommunikationsschnittstelle in den Geräten **3a** bis **3c** ausgeführt werden. Vorteilhafterweise sind auf diese Weise Prozesswerte in den Geräten **3a** bis **3c** simulierbar.

In einem ersten Prüfungsschritt **I** erfolgt eine Konfiguration der Schleifenprüfung durch Auswahl der hierin einzubeziehenden technischen Geräte **3a** bis **3c** sowie eine Festlegung der zu verwendenden Prüfungsvariante, hier ein Analoggerätefunktionstest für analoge Geräte **3a** bis **3c** in 4..20mA Technologie. Bei intelligenten Geräten **3a** bis **3c** mit digitaler Kommunikation kann vorgesehen sein, den Prüfwert aus der Steuereinheit **1** in das Gerät zu schreiben. Bei analogen Geräten **3a** bis **3c** ist das die Gerätemanagementeinheit **4** direkt am Gerät **3a** bis **3c** angeschlossen, um die Prüfwerte vorzugeben.

Hierfür können die Stromstärkenschritte 4, 8, 12, 16, 20 mA in aufsteigender sowie absteigender Reihenfolge gewählt werden sowie auch eine Geräteinstanz für die Schleifenprüfung, hier alle Messumformer. Außerdem kann ein Berichtsformat ausgewählt werden, welches die Ergebnisausgabe der Schleifenprüfung mit Resultat, Datum, Benutzer und dergleichen ausgibt.

Bei einer anschließenden Durchführung II der Schleifenprüfung durch die Gerätemanagementeinheit **4** wird die zuvor ausgewählte Prüfungsvariante für jedes technische Geräte **3a** bis **3c** ausgeführt. Jeder Stromschritt wird dabei für circa 5 Sekunden simuliert und das Ergebnis wird von der Gerätemanagementeinheit **4** erfasst. Diese Prozedur wird für jedes zuvor ausgewählte technische Gerät **3a** bis **3c** wiederholt. Optional kann ein "SQUAWK-Check" durchgeführt werden, falls das technische Gerät **3a** dies unterstützt und falls eine Person am Ort des technischen Gerätes **3a** anwesend sein kann. Das Ergebnis wird durch eine Informationsausgabe direkt am technischen Gerät **3a** bereitgestellt. Über den Gerätetreiber kann das technische Gerät **3a** in einen Simulationsmodus versetzt werden. Anschließend wird der Wert auf die erste Stufe von beispielsweise 4 mA gesetzt. Es wird dann der simulierte Wert mit Hilfe des Gerätetreibers gemessen. Wenn der gemessene Wert dem simulierten Wert entspricht innerhalb einer vorgegebenen Zeitperiode von beispielsweise 5 Sekunden nach Initiierung der Simulation, so wird dieser Prüfungsschritt als "bestanden" gewertet.

Die Gerätemanagementeinheit **4** wechselt anschließend zum nächst höheren Stromschritt und die Prozedur wird wiederholt. Wenn alle Stromschritte erfolgreich durchgetestet worden sind, so wird die Schleifenprüfung des technischen Geräts **3a** "bestanden" zur ausgewiesen, anderenfalls als "durchgefallen". Anschließend bewegt sich die Schleifenprüfung automatisch zum nächsten ausgewählten technischen Gerät **3b** und die Prüfung wird dort ausgeführt. Ist auf diese Weise das letzte technische Gerät **3c** geprüft, so wird die Schleifenprüfung der Funktionsfähigkeit der ausgewählten technischen Geräte **3a-3c** beendet.

Als nächstes gibt die Gerätemanagementeinheit **4** einen Bericht **III** über das positive oder negative Ergebnis der Schleifenprüfung aus. Der Bericht beinhaltet die Information hinsichtlich des Bestehens oder Nicht-Bestehens aller geprüften technischen Geräte, des Nutzers, der die Schleifenprüfung durchgeführt hat, Zeit und Datum der Schleifenprüfung und den physikalischen Prüfungsstatus.

Diese Funktionalität kann anstelle eines fest in der elektronischen Steuereinheit **1** implementierten Gerätemanagementeinheit auch von einem mobilen Gerät aus durchgeführt werden, welches drahtlos mit der Steuereinheit kommuniziert und die Schleifenprüfung durchführt.

Die Erfindung beschränkt sich nicht auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, dass technische Geräte geprüft werden, die mit einer anderen Kommunikationsschnittstelle, beispielsweise Feldgeräte mit HART-Kommunikation oder digitale Feldbusgeräte. In diesem Fällen ist eine Prüfungsvariante mit Prüfungsprotokoll zu wählen, was auf die Kommunikationsschnittstelle und die Art des technischen Gerätes abgestimmt ist. Die entsprechende Vorauswahl kann manuell oder automatisch durch die Gerätemanagementeinheit **4** durchgeführt werden.

### Bezugszeichenliste

- 1: elektronische Steuereinheit
- 2: Verbindung
- 3: technisches Gerät
- 4: Gerätemanagementeinheit

- I: Konfiguration der Schleifenprüfung
- II: Durchführung der Schleifenprüfung
- III: Ergebnisbericht der Schleifenprüfung

## Patentansprüche

1. Verfahren zur Schleifenprüfung der Funktionsfähigkeit von in einem industriellen Prozessautomatisierungssystem integrierten und von mindestens einer elektronischen Steuerungseinheit (1) über drahtgebundene oder drahtlose Verbindungen (2) betriebenen technischen Geräten (3a-3c) zur Steuerung des industriellen Prozesses,
**gekennzeichnet durch** die folgenden Prüfungsschritte:
a. Konfiguration der Schleifenprüfung **durch** Auswahl der hierin einzubeziehenden technischen Geräte (3a-3c) und Festlegung der zu verwendenden Prüfungsvariante in einer Gerätemanagementeinheit (4) mit graphischer Benutzerschnittstelle,
b. Durchführung der Schleifenprüfung **durch** die Gerätemanagementeinheit (4) bei jedem der ausgewählten technischen Geräte (3a-3c) mit der zugeordneten Prüfungsvariante.

2. Verfahren nach Anspruch 1,
**dadurch gekennzeichnet,**
**dass** durch die Gerätemanagementeinheit (4) ein Bericht über das positive oder negative Ergebnis der Schleifenprüfung der Funktionsfähigkeit für jedes der ausgewählten und geprüften Geräte (3a-3c) erstellt und ausgegeben wird.

3. Verfahren nach Anspruch 1,
**dadurch gekennzeichnet,**
**dass** die Schleifenprüfung nach Maßgabe einer definierten Prüfreihenfolge der ausgewählten technischen Geräte (3a-3c) durchgeführt wird.

4. Verfahren nach Anspruch 1,
**dadurch gekennzeichnet,**
**dass** bei der Konfiguration der Schleifenprüfung nur hinsichtlich der Kommunikationsschnittstelle und/oder der Geräteart gleichartige technische Geräte (3a-3c) für einen Schleifenprüfungsdurchlauf ausgewählt werden können.

5. Industrielles Prozessautomatisierungssystem mit einer Gerätemanagementeinheit (4) zur Schleifenprüfung der Funktionsfähigkeit von in dem Prozessautomatisierungssystem integrierten und von mindestens einer elektronischen Steuerungseinheit (1) über drahtgebundene oder drahtlose Verbindungen (2) betriebenen technischen Geräten (3a-3c) zur Steuerung des industriellen Prozesses,
**dadurch gekennzeichnet,**
**dass** die Gerätemanagementeinheit (4) mit Hilfe einer graphischen Benutzerschnittstelle dafür eingerichtet ist, die Schleifenprüfung durch Auswahl der hierin einzubeziehenden technischen Geräte (3a-3c) und Festlegung der zu verwendenden Prüfungsvariante zu konfigurieren und die Schleifenprüfung bei jedem der ausgewählten technischen Geräte (3a-3c) mit der zugeordneten Prüfungsvariante der Reihe nach durchzuführen.

6. Industrielles Prozessautomatisierungssystem nach Anspruch 5,
**dadurch gekennzeichnet,**
**dass** die technischen Geräte (3a-3c) des Prozessautomatisierungssystems hinsichtlich der Geräteart ausgewählt sind aus einer Gruppe von Aktoren und Sensoren, umfassend Stellglieder, Ventile, Messumformer.

7. Industrielles Prozessautomatisierungssystem nach Anspruch 5,
**dadurch gekennzeichnet,**
**dass** die technischen Geräte (3a-3c) des Prozessautomatisierungssystems hinsichtlich der Kommunikationsschnittstelle ausgewählt sind aus einer Gruppe, umfassend digitale Feldbusgeräte, Feldgeräte mit HART-Kommunikation, analoge Feldgeräte mit 4-20 mA Technologie.

8. Industrielles Prozessautomatisierungssystem nach Anspruch 5,
**dadurch gekennzeichnet,**
**dass** die Prüfungsvariante ausgewählt ist aus einer Gruppe, umfassend Analoggerätefunktionstest, HART-Gerätefunktionstest, Feldbusgerätefunktionstest.

9. Softwareprogrammprodukt mit Steueranweisungen zur Durchführung des Verfahren nach einem der Ansprüche 1 bis 4,
wobei die Steueranweisungen auf einem Datenträger abgespeichert sind, welcher mit der Gerätemanagementeinheit (4) des industriellen Prozessautomatisierungssystem nach einem der Ansprüche 5 bis 8 zum Datenaustausch verbindbar ist.

10. Softwareprogrammprodukt nach Anspruch 9,
**dadurch gekennzeichnet,**
**dass** der Datenträger als ein transportables Speichermedium oder als ein in einem Kommunikationsnetzwerk eingebundener Server ausgebildet sein.
